## Europäisches Patentamt

## European Patent Office

## Office européen des brevets

(11) Publication number: **0 052 697**
**A2**

(12)
# EUROPEAN PATENT APPLICATION

(21) Application number: **81106411.2**

(22) Date of filing: **18.08.81**

(51) Int. Cl.³: **A 47 J 19/02**

(30) Priority: **24.11.80 US 209413**

(43) Date of publication of application:
**02.06.82 Bulletin 82/22**

(84) Designated Contracting States:
**BE FR GB LU NL SE**

(71) Applicant: **SUNKIST GROWERS, INC.**
**14130 Riverside Drive**
**Sherman Oaks California(US)**

(72) Inventor: **Bilton, Dennis E.**
**6114 Holly Oak Drive**
**Alta Loma California(US)**

(72) Inventor: **LaVars, Everett G.**
**1001 East Kingsley**
**Pomona California(US)**

(74) Representative: **Lewald, Dietrich, Dipl.-Ing.**
**Birnauer Strasse 6**
**D-8000 München 40(DE)**

(54) **Mounting means for the strainer of a juice extracting device.**

(57) A juice extracting device (10) in which a main rotatable drive shaft (18) has a reamer (20) attached to its upper end, and a strainer (24) positioned beneath the reamer is operably connected by a unique mounting assembly with the upper end of an outer tubular shaft (28) in concentric surrounding relation to the main shaft, an eccentric (30) on the main shaft operates through a driving connection to impart an oscillatory or vibratory movement to the tubular shaft and the connected strainer (24). The mounting assembly for the strainer (24) includes a central hub (58) providing for the passage of the main drive shaft (18), and is further conformed to provide an inwardly tapered polygonal socket (66) which is adapted for the endwise reception of a tapered end projection (50) of the outer tubular shaft (28) into a seated connecting supporting relationship with the strainer hub (58). Preferably, the outer end surface of the end projection and the bottom surface of the socket (66), when seatingly connected, are spaced apart to facilitate removal of the strainer from the outer tubular shaft (28).

FIG. 1.

1

## BACKGROUND OF THE INVENTION

The present invention relates to a juice extracting device, and more particularly to improved mounting means for the juice strainer in such a device.

Juice extracting devices of the type contemplated by the present invention are common in the prior art and include generally a housing which provides a juice extracting chamber within which there is positioned a rotatable reamer for extracting juice from citrus fruit and the like. A strainer is conventionally arranged beneath the reamer to remove seeds and other solids from the juice. In the conventionally known devices, a motor positioned below the juice extracting chamber is connected with a main drive shaft which extends upwardly into the chamber and has the reamer detachably connected to its upper end. The strainer is operably connected with the upper end of an outer tubular shaft in concentric surrounding relation to the main shaft and being supported thereon for independent rotative movement. An eccentric on the main shaft is operative through an associated connection means to impart an oscillatory or vibratory movement to the tubular shaft and the connected strainer at its upper end. The strainer construction usually comprised a circular dish-shaped body of foraminous material and included a central metallic tubular sleeve which projected upwardly from the bottom of the strainer and was of a size to loosely slidingly fit over the upper end of the tubular shaft and mounted a set screw which could be tightened in order to secure the strainer to the tubular shaft. This arrangement was effective so long as the set screw remained tight, and provided a readily operable means permitting detachment of the strainer for cleaning or other purposes.

The utilization of a set screw for securing the strainer has presented a vexing problem in the prior known juice extracting devices due to the substantial inherent vibrations produced when the fruit is urged downwardly onto the reamer, and the vibrations of the strainer resulting from its oscillatory movement. Such conditions make it difficult to retain the set screw in its tightened condition, and there is a tendency for the set screw to loosen and thus interfere with the juice extraction operations to such an extent as to necessitate interruption of operations in order to again tighten the screw.

Accordingly, it has been realized that there is a presently existing need for an improved means for detachably connecting the strainer, in place of the set screw arrangement, and which would permit ease of disassembly, and at the same time assure that the strainer will remain in place during a juice extracting operation. The present invention provides the solution to the problem.

3

## SUMMARY OF THE INVENTION

It is one object of the present invention to provide a juice extracting device or the like including an upwardly extending rotatable main drive shaft having a reamer attached to its upper end and a juice strainer arranged beneath the reamer for retaining solids and allowing the juice to pass, the strainer being removably attached to an oscillatable member having a driving connection with the main shaft. The invention particularly contemplates an improved unique connection means for releasably attaching the strainer to the oscillatable member in which an inwardly tapered socket is arranged to receive endwise therein a tapered projection, the socket and projection being formed with complementary wall surfaces adapted for seating engagement in the attached position of the strainer.

A further object is to provide in a juice extracting device, an interfitting tapered socket and tapered projection for releasably connecting a juice strainer of the device with an oscillating member, whereby to effect operational vibrational movements of the strainer, the tapered socket and the tapered projection being operative in a manner such that the vibrations will tend to maintain the socket and projection in connected seated engagement.

A further object is to provide a tapered socket and tapered projection connection according to the preceding object in which the socket and projection are of polygonal configuration and have complementary tapered side walls disposed at a maximum angle of substantially $5^{\circ}$, and preferably

4

an angle of approximately 1° to the longitudinal axis of the seated projection and socket, and wherein as thus seated a bottom wall of the socket will be slightly spaced from an adjacent end wall of the projection so as to facilitate separation of the socket and projection, when detaching the strainer.

Another object is to provide a unique tapered socket and tapered projection connecting means for detachably mounting a juice strainer in a juice extracting device, and which may be embodied in an existing known conventional type of juice extracting device, with only a minimum modification of the existing elements.

Still another object is to provide as an article of manufacture, a juice strainer of unique construction for use in a juice extracting device according to the present invention.

Additional objects and advantages of the present invention are made apparent in the following description having reference to the accompanying drawings.


## BRIEF DESCRIPTION OF THE DRAWINGS

Referring to the accompanying drawings, which are for illustrative purposes only:

FIG. 1 is a side elevational view of a juice extracting device according to the present invention, parts being illustrated in section to better show the driving connection for the strainer of the present invention;

FIG. 2 is a transverse sectional view, taken substantially on line 2-2 of Fig. 1;

FIG. 3 is an enlarged fragmentary view partly in section and showin the details of the means for releasably connecting the strainer with a driving member, the strainer being in detached relation;

FIG. 4 is a view similar to Fig. 3 but showing the strainer in attached relation to the driving member; and

FIG. 5 is a transverse sectional view, taken substantially on line 5-5 of Fig. 4.

## DESCRIPTION OF THE PREFERRED EMBODIMENT

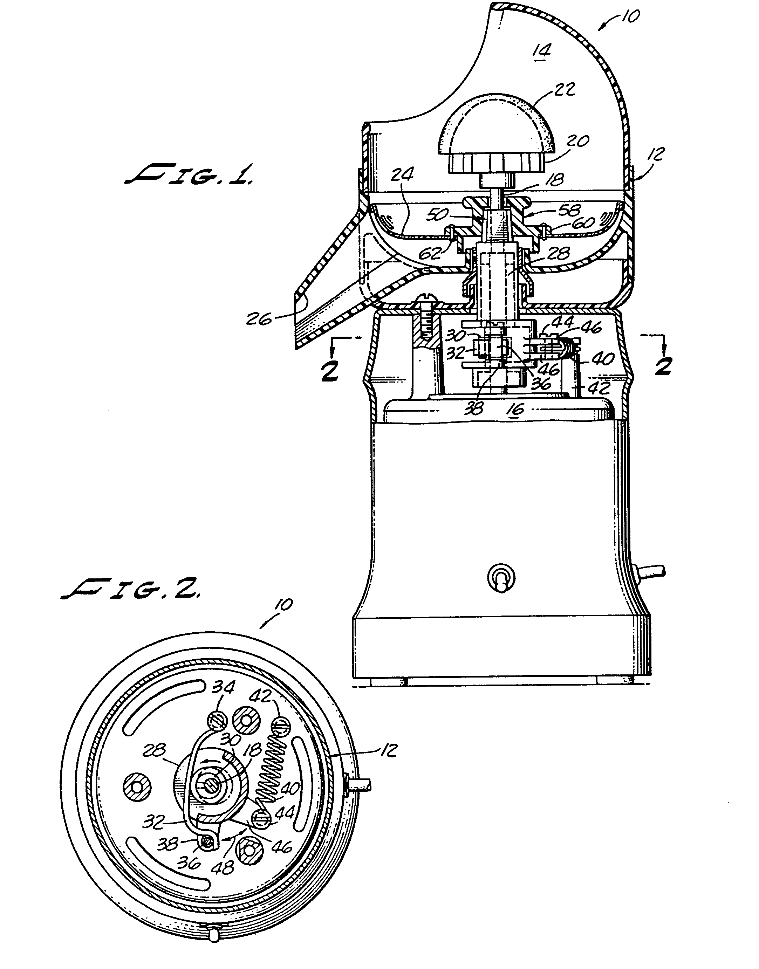

Referring more specifically to the drawings, for illustrative purposes, the invention is shown as being applied to a juice extracting device, as generally indicated at 10, in which a generally upright housing 12 is fabricated to form an upper juice extracting chamber 14. A motor 16, disposed in a lower compartment of the housing is operatively connected with an upwardly extending main drive shaft 18 having its upper end positioned in the juice extraction chamber 14 where it removably mounts a connected reamer 20 which is adapted to remove the juice and pulp in a well-known manner from a citrus fruit half 22 when disposed on the reamer, in a position as indicated in Fig. 1.

A dish-shaped strainer 24 of a foraminous material is positioned below the reamer and is of a size to extend radially outwardly so as to span the interior of the chamber 14 and separate the pulp from the extracted juice as it passes downwardly through the strainer to the bottom of the chamber 14, from whence it is conducted to a discharge spout 26.

The strainer 24 is removably connected with the upper end of a tubular shaft 28 which is disposed in concentric surrounding relation to the main drive shaft 18 and rotatably supported thereon by conventional means for relative independent rotative movements.

In order to facilitate the separation of the pulp and juice by means of the strainer 24, provision is made for oscillating the tubular shaft 28 alternately in opposite directions in order to impart and produce vibrational movements of the strainer. Oscillating movements of the shaft 28 is obtained by means of an eccentric disk member 30 which is mounted on the main drive shaft 18 at a position near the lower end of the tubular shaft 28.

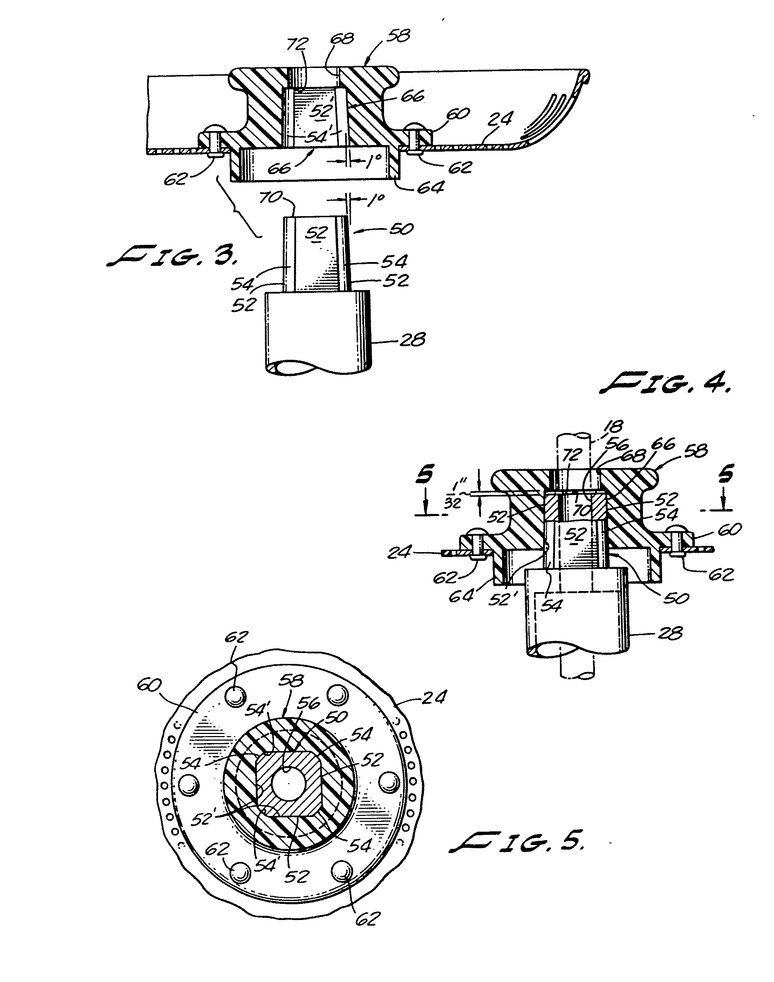

The eccentric 30 is operatively associated with a swingable arm member 32, as best shown in Fig. 2, as being pivoted at one end upon a fixed pivot member 34. The opposite end of the arm 32 is engaged behind a pin 36 at the outermost end of a radially extending arm 38 at the lower end of the tubular shaft 28. As thus arranged, it will be apparent that rotation of the eccentric disk 30 will operate through the arm member 32 to rotate the tubular shaft 28 in one direction against the action of a biasing spring 40 which is fixedly anchored at one end to a stationary post 42. The other end of the spring 40 is connected by a securing member 44 to the outer end of a second radial arm 46 carried by the tubular shaft 28. The eccentric disk 30 and the spring 40 thus coact to produce oscillatory rotational movements of the tubular shaft 28, as indicated by the reversed arrows 48. Concurrently with the oscillatory movement of the strainer 24, the reamer 20 will be continuously driven in one direction of rotation.

The structure and operation as thus far described are conventional and have heretofore been known in the prior art juice-extracting devices. The present invention is primarily concerned with unique interconnecting means for mounting and connecting the strainer 24 with the tubular shaft 28 in a manner such that there will be no tendency of the strainer to become disconnected as a result of its vibrational movements, and yet which will permit ready detachment of the strainer when desired. The improved features of construction are best shown in Figs. 3, 4 and 5. For such purpose, the upper end of the tubular shaft 28 is provided with a tapered end projection, as generally indicated by the numeral 50. This projection is transversely of polygonal configuration, and for illustrative purposes is shown as being transversely of a generally square configuration with side walls 52 which are preferably interconnected by rounded corners as indicated at 54. The projection 50 is formed with a central axial bore 56 to permit passage of the main drive shaft 18 therethrough for driving connection with the reamer 20.

As will be seen, the strainer 24 is provided with a central hub structure, as generally indicated at 58, and which is formed from an elastomeric material such as nylon. The general configuration of the hub structure is such that it forms an upstanding knob for facilitating the manual attachment and detachment of the strainer to the tubular shaft 28. The hub embodies a

8

peripheral circumferentially extending radial attaching flange 60 to facilitate its attachment as by suitable rivets or other appropriate means 62 to the bottom wall of the dish-shaped strainer in a mounted position in which an integrally formed annular end flange 64 will extend downwardly to the exterior below the bottom wall of the strainer.

The hub structure 58 is formed to provide a downwardly opening tapered socket, as generally indicated by the numeral 66, this socket being formed with tapered complementary side walls 52' and rounded corners 54', and being adapted to receive the tapered end projection 50 endwise therein to connect the strainer 24 with the tubular shaft 28. The bottom of the socket 66 communicates with an axially aligned bore opening 68 which permits the passage of the main drive shaft 18 therethrough for connection with the reamer.

The taper for the side walls of both the projection 50 and the socket 66 may be at a maximum angle relative to the axis of the main drive shaft 18 of approximately $5^{\circ}$, but as shown in Fig. 3, preferably have tapered side walls which form an angle of approximately $1^{\circ}$ relative to the axis of the main drive shaft. The seating fit between the tapered end projection 50 and the tapered socket 66 is selected so that in their seated connected position, the adjacent end surface 70 of the tapered projection and the bottom surface 72 of the socket will be in spaced apart relation. For example, the spacing between these surfaces may be of the order of 1/32 inch in order to facilitate disconnection and removal of the strainer from the tubular shaft 28 when desired for cleaning or other purposes.

The utilization of a tapered projection and tapered socket interconnection between the strainer 24 and the tubular shaft 28 has in practice been found to be particularly effective since the vibrating motions of the device operate to cause the socket and projection under induced downward movement of the strainer by gravity to snugly maintain their seated engagement. However, because of the spacing between the surfaces 70 and 72, the strainer may be readily detached when necessary.

From the foregoing description and drawings, it will be clearly evident that the delineated objects and features of the invention will be accomplished.

Various modifications may suggest themselves to those skilled in the art without departing from the spirit of the disclosed invnetion and, hence, it is not desired to be restricted. to the specific form shown or uses mentioned, except to the extent indicated in the appended claims.

0052697

10

WHAT I CLAIM IS:

1.    In a juice extracting device or the like including an upwardly extending rotatable main drive shaft with a reamer removably attached to its upper end and a vibratable juice strainer positioned beneath the reamer, said strainer being removably attached to an actuating member, the improvement comprising, means for connecting and disconnecting the strainer with respect to said member comprising a tapered socket and a tapered projection formed with complementary wall surfaces adapted for seating engagement, when the projection is inserted endwise into said socket.

2.    The juice extracting device of claim 1 in which, the tapered socket is in the strainer and the tapered projection is on an oscillatable shaft having a driving connection with said main drive shaft, and said drive shaft extends axially of said oscillatable shaft, projection and socket.

3.    The juice extracting device of claim 1 in which, the angle of the tapers of the socket and projection is such that the vibration action of the strainer will tend to maintain the socket and projection in connected relation during operation of the juice extracting device.

4.    The juice extracting device of claim 2 wherein the socket and projection are of polygonal configuration and the complementary wall surfaces form a maximum angle relative to the axis of the drive shaft of not more than substantially $50^{\circ}$.

5. The juice extracting device of claim 4 in which said angle is approximately 1°.

6. The juice extracting device of claim 4 wherein adjacent edge margins of said wall surfaces are rounded.

7. The juice extracting device of claim 1 wherein said socket and said projection in their connected relation have transversely extending adjacent end wall surfaces that are maintained in spaced apart relation by the seated engagement of their complementary wall surfaces to facilitate disconnecting separation of said socket and said projection.

8. The juice extracting device of claim 1 wherein the socket and projection are transversely of a square configuration.

9. The juice extracting device of claim 2 wherein said socket is formed from an elastomeric material.

10. A mounting assembly for use in a juice extracting device or the like to removably position a strainer below a reamer and provide an operating connection with a reamer drive shaft, comprising, a projection adapted for connection to the drive shaft, said projection having polygonal tapering sides, and a socket having polygonal tapering sides for seating engagement with the tapering sides of said projection, when the projection is inserted into said socket.

12

11. The mounting assembly of claim 10 wherein the socket and projection include coaxial passageways for the passage of the drive shaft therethrough to permit removable connection of the reamer to its upper end in a position above said strainer.

12. The mounting assembly of claim 11 wherein the polygonal sides of said projection and said socket form a maximum angle relative to the axis of the associated drive shaft of not more than substantially $5^{\circ}$.

13. The mounting assembly of claim 12 wherein said angle is approximately $1^{\circ}$.

14. The mounting assembly of claim 10 wherein said polygonal socket and said polygonal projection in their connected relation have transversely extending adjacent end wall surfaces that are maintained in spaced-apart relation by the seated engagement of their polygonal sides to facilitate disconnecting separation of said socket and said projection.

15. The mounting assembly of claim 10 including motor means coupled with the drive shaft for imparting rotary motion to the reamer, and coupled with the projection and connected socket for imparting vibrational motion to the strainer and the connected projection and socket, whereby the vibrational motion is effective to maintain the strainer in its mounted operative position during operation of the juice extracting device.

16. The mounting assembly of claim 10 wherein said polygonal socket and projection are transversely of a square configuration.

17. The mounting assembly of claim 10 wherein said socket is formed from an elastomeric material.

18. As an article of manufacture, a strainer for a juice extracting device, comprising:

a generally dish-shaped body of a foraminous material; and

means centrally of said body forming a downwardly opening inwardly tapered socket adapted for the endwise reception of a tapered supporting member.

19. A strainer according to claim 18 in which:

said socket is formed in a central hub member of an elastomeric material.

20. A strainer according to claim 19 in which:

the hub member is conformed to provide an upstanding manually engageable knob within said body;

an annular bottom end flange on the hub projects through a central opening in the bottom of the dish-shaped body; and

a peripheral radial mounting flange on the hub is secured to the adjacent bottom portion of said bottom.

14

21. A strainer according to claim 19 in which the inner end of said socket is in communication with an axially extending bore passage.

22. A strainer according to claim 18 in which said socket is of polygonal configuration with tapered sides which form a maximum angle relative to the socket axis of not more than substantially $5^{\circ}$.

23. A strainer according to claim 18 in which said socket is polygonal and has tapered sides which form an angle of substantially $1^{\circ}$ with respect to the central axis of said socket.

24. A strainer according to claim 18 in which said socket transversely is of generally square configuration.

25. A strainer according to claim 24 in which the socket has side walls with rounded adjacently disposed edge margins.

FIG.1.

FIG.2.

FIG. 3.

FIG. 4.

FIG. 5.